# EUROPEAN PATENT APPLICATION

(11) **EP 4 270 757 A1**
(43) Date of publication of application: **01.11.2023**
(21) Application number: 22170490.1
(22) Date of filing: 28.04.2022
(51) Int. Cl.: H02M 3/157, H02M 3/158, H02M 1/15, H05B 45/59, H05B 45/375

(54) **CONTROL APPARATUS AND METHOD FOR CONTROLLING TWO SWITCHES OF A SYNCHRONOUS BUCK CONVERTER**

(71) Applicant: Tridonic GmbH & Co. KG, 6851 Dornbirn (AT)
(72) Inventor: Saccavini, Lukas, 6850 Dornbirn (AT); Romano, Fabio, 6850 Dornbirn (AT); Kucera, Clemens, 6850 Dornbirn (AT)
(74) Representative: Beder, Jens

(57) **Abstract**

The invention relates to a control apparatus for controlling two switches of a synchronous buck converter. The control apparatus is configured to receive a measurement signal of an inductor current flowing through an inductor of the synchronous buck converter, compare the measurement signal with an upper threshold and a lower threshold, determine a first point in time at which the measurement signal reaches or exceeds the upper threshold and a second point in time at which the measurement signal reaches or falls below the lower threshold, and control at least one of the two switches to switch at a third point in time or a fourth point in time. The third point in time is equal to the first point in time delayed by a first variable delay time. The fourth point in time is equal to the second point in time delayed by a second variable delay time.

## Description

The invention relates to a control apparatus for controlling two switches of a synchronous buck converter; an operating device for lighting means, the operating device comprising such a control apparatus; and to a luminaire comprising such an operating device. The invention further relates to a method for controlling two switches of a synchronous buck converter.

A synchronous buck converter is an example of a DC-to-DC converter. It differs from a buck converter, in that in the synchronous buck converter the diode of the buck converter is replaced by a further switch (second switch). Thus, the synchronous buck converter comprises two switches for controlling an inductor current flowing through an inductor of the synchronous buck converter, in particular for controlling rising and falling of the inductor current. This allows controlling an output of the synchronous buck converter, e.g. current, voltage or electrical energy providable by the synchronous buck converter. For example, by controlling the two switches to control rising and falling of the inductor current of the inductor of the synchronous buck converter a current, e.g. a temporal average current, providable by the synchronous buck converter at its output may be controlled. The terms "increase" and "decrease" may be used as synonyms for the terms "rise" and "fall".

For determining points in time at which switching of a respective switch of the two switches of the synchronous buck converters is to be controlled, a comparator maybe used for comparing the inductor current (rising inductor current) with a higher threshold (a desired maximum inductor current) and the inductor current (falling inductor current) with a lower threshold (a desired minimum inductor current). For this, it is problematic, that the a clock signal's frequency, with which the output of the comparator is sampled is not synchronous with the temporal position of the inductor current's rise respectively fall. In particular, the frequency is not synchronous with occurrence of the desired inductor current's maximum and minimum. As a result, the actual reaching of a respective threshold may be sampled and, thus, wrongly determined up to a period (inverse of the frequency) of the clock signal later than the actual point in time at which the respective threshold is actually reached. In case the synchronous buck converter is used for electrically supplying lighting means, such as at least one light emitting diode (LED), this may cause flickering of the light emission of the lighting means. That is, a light intensity variation of the light emitted by the lighting means may be caused. The frequency used for sampling corresponds to the frequency of the clock signal that is used for clocking a control apparatus for controlling switching of the two switches. The clock signal may be referred to as "system clock signal" or "system clock".

A problem is that the aforementioned error regarding determination of reaching a respective threshold may often occur in a row near the period (inverse of the frequency) of the clock signal until the error suddenly is change by a whole period. This new value may then be kept for a time until the error is compensated again. This slow change of the aforementioned occurring error causes flickering in the light emission, i.e. a light intensity variation of the light emission, which is visible to a person, i.e. the human eye.

Therefore, it is an object of the invention to provide a control apparatus for controlling two switches of a synchronous buck converter, which overcomes or at least reduces the above-described problem. It is in particular an object of the invention to provide a control apparatus for controlling two switches of a synchronous buck converter, which allows countering the above-described problem caused by sampling and, thus, digitalization.

These and other objects, which become apparent upon reading the following description, are solved by the subject-matter of the independent claims. The dependent claims refer to preferred embodiments of the invention.

According to a first aspect of the invention, a control apparatus for controlling two switches of a synchronous buck converter is provided. The control apparatus is configured to receive a measurement signal of an inductor current flowing through an inductor of the synchronous buck converter and compare the measurement signal with an upper threshold and a lower threshold. Further, the control apparatus is configured to determine a first point in time at which the measurement signal reaches or exceeds the upper threshold and a second point in time at which the measurement signal reaches or falls below the lower threshold. Furthermore, the control apparatus is configured to control at least one of the two switches to switch at a third point in time or a fourth point in time. The third point in time is equal to the first point in time delayed by a first variable delay time. The fourth point in time is equal to the second point in time delayed by a second variable delay time.

Alternatively, the measurement signal is a result of monitoring an output voltage of the synchronous buck converter. In this case, the upper threshold and the lower threshold are thresholds for the measured output voltage value. Hereinafter, for conciseness of the explanations, the details will be provided specifically for measuring the inductor current. However, it is apparent that an analogous proceeding is possible in case of monitoring an output voltage of a synchronous buck converter is possible.

The first variable delay time and the second variable delay time may be referred to as first configurable delay time and second configurable delay time, respectively. The term "variable or configurable dither delay" may be used as a synonym for the term "variable or configurable delay time". The passage "an inductor current of an inductor of the synchronous buck converter" may be synonymously used for the passage "an inductor current flowing through an inductor of the synchronous buck converter".

Thus, the first aspect proposes to counter the aforementioned described error due to digitization by switching at least one switch of the two switches at a point in time that is variably delayed with respect to a previous point in time at which the measurement signal of the inductor current has reached a respective threshold. This allows variably delaying the switching of the two switches with regard to points in time, at which switching should actually occur, so that a flickering in a light emission of lighting means that may be electrically supplied by the asynchronous buck converter is not visible to a person, i.e. the human eye. In other words, the control apparatus of the first aspect allows the frequency of occurrence of the above-described error to be modulated to a higher frequency that is not visible to a person.

The measurement signal may be a voltage that indicates or equals (corresponds) to the inductor current. That is, the measurement signal may be a voltage that represents the inductor current according to Ohm's law. Thus, the upper threshold may be a value of the measurement signal that indicates or equals to a desired maximum value of the inductor current (i.e. indicates the desired maximum inductor current). The lower threshold may be a value of the measurement signal that indicates or equals to a desired minimum value of the inductor current (i.e. indicates the desired minimum inductor current).

The control apparatus may be a digital control apparatus. For example, the control apparatus may be a controller, microcontroller, processor, microprocessor, application specific integrated circuit (ASIC), field programmable gate array (FPGA) or any combination thereof.

The two switches of the synchronous buck converter may be transistors. Examples of transistors comprise insulated gate bipolar transistors (IGBTs); bipolar junction transistors (BJTs); field-effect transistors (FETs), e.g. metal-oxide semiconductor FETs; etc. The two switches may be referred to as "controllable switches".

The first variable delay time may be understood as a first delay time that changes or varies over time. The second variable delay time may be understood as a second delay time that changes or varies over time.

The first variable delay time may be tens of nanoseconds. The second variable delay time may be tens of nanoseconds. Optionally, a value of the first variable delay time may be zero seconds. In this case, there is no delay and, thus, the third point in time equals to the first point in time. That is, the first variable delay time may be equal to or greater than zero seconds. Optionally, a value of the second variable delay time may be zero seconds. In this case, there is no delay and, thus, the fourth point in time equals to the second point in time. That is, the second variable delay time may be equal to or greater than zero seconds.

For example the first variable delay time may be zero seconds, 20 nanoseconds, 40 nanoseconds etc. The same may apply for the second variable delay time.

The control apparatus may be configured to control a respective switch of the two switches to switch at a respective point in time by providing at the respective point in time a control signal or instruction to the respective switch, which instructs the respective switch to switch. The passage "the control apparatus may be configured to control a respective switch to switch at a respective point in time" may be understood such that the control apparatus may be configured to control at the respective point in time the respective switch to switch (e.g. by providing at the respective point in time an instruction or control signal to the respective switch). In practice, the actual switching of the respective switch may not occur exactly at the respective point in time due to a time needed for the control by the control apparatus (e.g. the time it takes for an instruction or control signal to be communicated from the control apparatus to the respective switch). That is, such a delay is depend on the structure and function of the control apparatus and its components as well as the structure and function of the synchronous buck converter and its components. The above described first variable delay time and second variable delay times are different and much greater than the aforementioned delay. Namely, they are introduced on purpose for a control of the two switches by the control apparatus.

Optionally, the first variable delay time and the second variable delay time are different to each other.

The first variable delay time and the second variable delay time may be independent of each other. In other words, the first variable delay time and the second variable delay time may change or vary over time differently to each other.

The control apparatus may be configured to control a first switch of the two switches to switch to the non-conducting state at the third point in time or to the conducting state at the fourth point in time. In addition or alternatively, the control apparatus may be configured to control a second switch of the two switches to switch to the non-conducting state at the fourth point in time or to the conducting state at the third point in time.

The first point in time may be a point in time at which switching of the first switch to the non-conducting state is to be actually controlled. That is, the first switch is actually to be controlled to switch to the non-conducting state when the control apparatus determines that the measurement signal reaches or exceeds the upper threshold. The second point in time may be a point in time at which switching of the second switch to the non-conducting state is to be actually controlled. That is, the second switch is actually to be controlled to switch to the non-conducting state when the control apparatus determines that the measurement signal reaches or falls below the lower threshold.

The first switch may be configured to cause, in its conducting state, the inductor current to rise. The second switch may be configured to cause, in its conducting state, the inductor current to fall. Thus, the control apparatus may be configured to cause the inductor current to rise by controlling the first switch to switch to the conducting-state. The control apparatus may be configured to cause the inductor current to stop rising by controlling the first switch to switch to the non-conducting state. The control apparatus may be configured to cause the inductor current to fall by controlling the second switch to switch to the conducting-state. The control apparatus may be configured to cause the inductor current to stop falling by controlling the second switch to switch to the non-conducting state.

The control apparatus may be configured to cause the inductor current to rise by controlling the two switches such that the first switch is in the conducting state while the second switch is in the non-conducting state. The control apparatus may be configured to cause the inductor current to fall by controlling the two switches such that the second switch is in the conducting state while the first switch is in the non-conducting state.

The first switch may be referred to as high-side switch of the synchronous buck converter. The second switch may be referred to as low-side switch of the synchronous buck converter.

Optionally, the control apparatus is configured to control the first switch to switch to the non-conducting state at the third point in time, and the control apparatus is configured to control the second switch to switch to the non-conducting state at the second point in time or at the fourth point in time.

That is, according to an embodiment, the control apparatus may be configured to control the first switch to switch to the non-conducting state at the third point in time and the second switch to switch to the non-conducting state at the second point in time. According to another embodiment the control apparatus may be configured to control the first switch to switch to the non-conducting state at the third point in time and the second switch to switch to the non-conducting state at the fourth point in time.

Optionally, the control apparatus is configured to control the second switch to switch to the non-conducting state at the fourth point in time, and the control apparatus is configured to control the first switch to switch to the non-conducting state at the first point in time or at the third point in time.

That is, according to an embodiment, the control apparatus may be configured to control the second switch to switch to the non-conducting state at the fourth point in time and the first switch to switch to the non-conducting state at the first point in time. According to another embodiment, the control apparatus may be configured to control the second switch to switch to the non-conducting state at the fourth point in time and the first switch to switch to the non-conducting state at the third point in time.

The control apparatus may be configured to control the two switches such that the two switches are inversely switched between the conducting state and the non-conducting state.

The control apparatus may be configured to control a first switch of the two switches to switch to the conducting state after a first dead time has passed since the control apparatus has controlled a second switch of the two switches to switch to the non-conducting state. Further, the control apparatus may be configured to control the second switch to switch to the conducting state after a second dead time has passed since the control apparatus has controlled the first switch to switched to the non-conducting state. During the first dead time and the second dead time the two switches are both in the non-conducting state.

The first dead time and the second dead time may be equal to each other.

The first variable delay time and the second variable delay time (when being greater than zero seconds) may be greater than the first dead time and the second dead time.

The control apparatus may be configured to be clocked with a clock signal, and compare the measurement signal with the lower threshold and the upper threshold at each clock of the clock signal. Optionally the control apparatus is configured to compare the measurement signal with the lower threshold and the upper threshold at a rising edge or at a falling edge of each clock of the clock signal.

In other words, the control apparatus may be configured to evaluate the measurement signal at each clock, optional at a rising edge or at a falling edge of each clock, of the clock signal for determining whether the first point in time or the second point in time is present. That is, the control apparatus may be configured to evaluate the measurement signal with the frequency of the clock signal. The clock signal may be referred to as "system clock signal" or "system clock".

The first variable delay time may be smaller than or equal to the period (inverse of the frequency) of the clock signal. The second variable delay time may be smaller than or equal to the period (inverse of the frequency) of the clock signal.

The control apparatus may be configured to compare the measurement signal with the lower threshold and the upper threshold using at least one comparator. Thus, for comparing the measurement signal with the lower threshold and the upper threshold at each clock of the clock signal, the control apparatus may be configured to sample the output of the at least one comparator at each clock, optional at a rising edge or at a falling edge of each clock, of the clock signal. That is, the control apparatus may be configured to sample the output of the at least one comparator with the frequency of the clock signal.

For example, the control apparatus may be configured to compare the measurement signal with the lower threshold and the upper threshold using a comparator, wherein the measurement signal is input to the comparator and the upper threshold or lower threshold is input as reference value to the comparator. According to another example, the control apparatus may be configured to compare the measurement signal with the lower threshold and the upper threshold using two comparators. The measurement signal may be input to the two comparators, the upper threshold may be input to a first comparator and the lower threshold may be input to a second comparator of the two comparators.

Within a range for the first variable delay time, the first variable delay time may be randomly changed or changed according to a repetitive pattern. Within a range for the second variable delay time, the second variable delay time may be randomly changed or changed according to a repetitive pattern

The control apparatus may be configured to randomly change, within the range for the first variable delay time, the first variable delay time. The control apparatus may be configured to change, within the range for the first variable delay time, the first variable delay time according to a repetitive pattern. The control apparatus may be configured to randomly change, within the range for the second variable delay time, the second variable delay time. The control apparatus may be configured to change, within the range for the second variable delay time, the second variable delay time according to a repetitive pattern. The control apparatus may be configured to receive the first variable delay time and/or the second variable delay time from extern (i.e. from outside the control apparatus).

The first variable delay time may be periodically changed. Optionally, the first variable delay time is changed every switching period of switching one of the two switches. The second variable delay time may be periodically changed. Optionally, the second variable delay time is changed every switching period of switching one of the two switches.

The control apparatus may be configured to periodically change the first variable delay time. Optionally, the control apparatus is configured to change the first variable delay time every switching period of switching one of the two switches (e.g. the first switch). The control apparatus may be configured to periodically change the second variable delay time. Optionally, the control apparatus is configured to change the second variable delay time every switching period of switching one of the two switches (e.g. the second switch).

The control apparatus may be configured to change the first variable delay time and/or the second variable delay time for controlling the two switches such that the two switches may be switched with a frequency that is not visible to a person when the synchronous buck converter electrically supplies lighting means.

In order to achieve the control apparatus according to the first aspect of the invention, some or all of the above-described optional features may be combined with each other.

According to a second aspect of the invention, an operating device for lighting means is provided. The lighting means are optionally at least one light emitting diode (LED). The operating device comprises the control apparatus according to the first aspect as described above, and a synchronous buck converter for electrically supplying the lighting means. The synchronous buck converter comprises two switches. The control apparatus is configured to control the two switches of the synchronous buck converter.

The two switches of the synchronous buck converter may be transistors. Examples of transistors comprise field-effect transistors (FETs), such as metal-oxide semiconductor FETs, insulated gate bipolar transistors (IGBTs), bipolar junction transistors (BJTs) etc.

The above description with regard to the control apparatus according to the first aspect of the invention is also valid for the operating device according to the second aspect of the invention.

The operating device according to the second aspect of the invention achieves the same advantages as the control apparatus according to the first aspect of the invention.

In order to achieve the operating device according to the second aspect of the invention, some or all of the above-described optional features may be combined with each other.

According to a third aspect of the invention, a luminaire is provided. The luminaire comprises the operating device according to the second aspect as described above, and lighting means. The lighting means are optionally at least one light emitting diode, (LED). The operating device is configured to operate the lighting means.

The lighting means may be electrically connected to an output of the operating device such that the synchronous buck converter of the operating device is configured to electrically supply the lighting means. For example, the lighting means may be electrically connected to an output of the synchronous buck converter.

The above description with regard to the control apparatus according to the first aspect of the invention and the operating device according to the second aspect of the invention is also valid for the luminaire according to the third aspect of the invention.

The luminaire according to the third aspect of the invention achieves the same advantages as the control apparatus according to the first aspect of the invention.

According to a fourth aspect of the invention, a method for controlling two switches of a synchronous buck converter is provided. The method comprises receiving a measurement signal of an inductor current flowing through an inductor of the synchronous buck converter, and comparing the measurement signal with an upper threshold and a lower threshold. Further, the method comprises determining a first point in time at which the measurement signal reaches or exceeds the upper threshold and a second point in time at which the measurement signal reaches or falls below the lower threshold. Furthermore, the method comprises controlling at least one of the two switches to switch at a third point in time or a fourth point in time. The third point in time is equal to the first point in time delayed by a first variable delay time. The fourth point in time is equal to the second point in time delayed by a second variable delay time.

Optionally, the first variable delay time and the second variable delay time are different to each other.

The method may comprise controlling a first switch of the two switches to switch to the non-conducting state at the third point in time or to the conducting state at the fourth point in time. In addition or alternatively, the method may comprise controlling a second switch of the two switches to switch to the non-conducting state at the fourth point in time or to the conducting state at the third point in time.

Optionally, the method comprises controlling the first switch to switch to the non-conducting state at the third point in time, and the method comprises controlling the second switch to switch to the non-conducting state at the second point in time or at the fourth point in time.

Optionally, the method comprises controlling the second switch to switch to the non-conducting state at the fourth point in time, and the method comprises controlling the first switch to switch to the non-conducting state at the first point in time or at the third point in time.

The method may comprise controlling the two switches such that the two switches are inversely switched between the conducting state and the non-conducting state.

The method may comprise controlling a first switch of the two switches to switch to the conducting state after a first dead time has passed since a second switch of the two switches has been controlled to switch to the non-conducting state. Further, the method may comprise controlling the second switch to switch to the conducting state after a second dead time has passed since the first switch has been controlled to switch to the non-conducting state. During the first dead time and the second dead time the two switches are both in the non-conducting state.

The term "elapse" may be sued as a synonym for the term "pass".

The method may comprise comparing the measurement signal with the lower threshold and the upper threshold at each clock of a clock signal. Optionally the method comprises comparing the measurement signal with the lower threshold and the upper threshold at a rising edge or at a falling edge of each clock of the clock signal.

The method may comprise randomly changing, within a range for the first variable delay time, the first variable delay time. Alternatively, the method may comprise changing according to a repetitive pattern the first variable delay time within a range for the first variable delay time. The method may comprise randomly changing, within a range for the second variable delay time, the second variable delay time. Alternatively, the method may comprise changing according to a repetitive pattern the second variable delay time within a range for the second variable delay time.

The method may comprise periodically changing the first variable delay time. Optionally, the method comprises changing the first variable delay time every switching period of switching one of the two switches. The method may comprise periodically changing the second variable delay time. Optionally, the method comprises changing the second variable delay time every switching period of switching one of the two switches.

The above description with regard to the control apparatus according to the first aspect of the invention is also valid for the method according to the fourth aspect of the invention.

The method according to the fourth aspect of the invention achieves the same advantages as the control apparatus according to the first aspect of the invention.

In order to achieve the method according to the fourth aspect of the invention, some or all of the above-described optional features may be combined with each other.

A fifth aspect of the invention provides a computer program comprising program code for performing when implemented on a processor, a method according to the fourth aspect of the invention.

A sixth aspect of the invention provides a computer program comprising a program code for performing the method according to the fourth aspect of the invention.

An seventh aspect of the invention provides a computer comprising a memory and a processor, which are configured to store and execute program code to perform the method according to the fourth aspect of the invention.

An eighth aspect of the invention provides a non-transitory storage medium storing executable program code which, when executed by a processor, causes the method according to the fourth aspect of the invention.

A ninth aspect of the invention provides a computer readable storage medium storing executable program code which, when executed by a processor, causes the method according to the fourth aspect of the invention.

The computer program of the fifth aspect, the computer program of the sixth aspect, the computer of the seventh aspect, the non-transitory storage medium of the eighth aspect and the computer readable storage medium of the ninth aspect each achieve the same advantages as the control apparatus of the first aspect.

In the following, the invention is described exemplarily with reference to the enclosed Figures, in which
- **Figure 1**: is a circuit diagram of an example of a control apparatus, an operating device for lighting means and a luminaire according to an embodiment of the invention;
- **Figure 2**: shows an example of a temporal course of an inductor current flowing through an inductor of a synchronous buck converter with two switches, when the two switches are switched;
- **Figure 3**: shows an example of control signals providable by a control apparatus according to an embodiment of the invention;
- **Figure 4**: shows two examples of a temporal course of an inductor current flowing through an inductor of a synchronous buck converter with two switches, when the two switches are switched; and
- **Figure 5**: shows an example of a control scheme performable by a control apparatus according to an embodiment of the invention.

In the Figures, corresponding elements have the same reference signs.

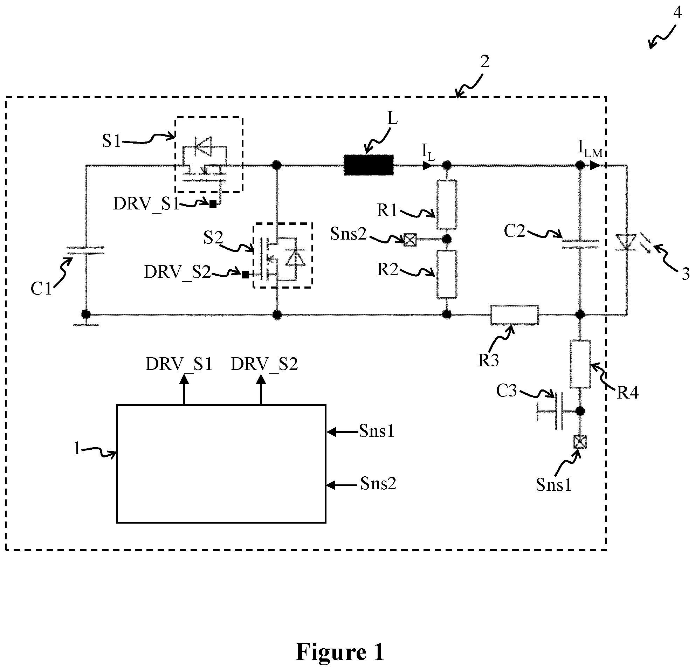

**Figure 1** is a circuit diagram of an example of a control apparatus, an operating device for lighting means and a luminaire according to an embodiment of the invention.

The control apparatus 1 of Figure 1 is an example of the control apparatus according to the first aspect of the invention, the operating device 2 of Figure 1 is an example of the operating device according to the second aspect of the invention and the luminaire 4 of Figure 1 is an example of the luminaire according to the third aspect of the invention.

The luminaire 4 comprises lighting means 3 and the operating device 2. The lighting means 3 may be one or more light emitting diodes (LEDs). In addition or alternatively, the lighting means 3 may comprise at least one other type of lighting means. The operating device 2 is configured to operate the lighting means 3. For this, the lighting means 3 may be electrically connected to the output of a synchronous buck converter of the operating device 2, as shown in Figure 1. The term "electrically connect" may be abbreviated by the term "connect". In particular, the lighting means 3 may be connected to a second capacitor C2 (may be referred to as output capacitor) of the synchronous buck converter.

The operating device 2 may comprise the synchronous buck converter for electrically supplying the lighting means 3, e.g. providing a current I_{LM} (lighting means current) to the lighting means 3 (when the lighting means 3 are connected to the synchronous buck converter). The synchronous buck converter comprises two switches S1 and S2 and an inductor L. Thus, the synchronous buck converter has the same topology as a buck converter only that the diode of the buck converter is replaced by a second switch S2. As shown in Figure 1, the two switches may be MOSFETs, wherein the body diode of the respective MOSFET is shown. This is only by way of example and, thus, the two switches maybe implemented by any other electrical switch (e.g. any other transistor type). Further, the synchronous buck converter comprises a first capacitor C1 and the second capacitor C2. The first capacitor C1 may be referred to as DC-link capacitor or input capacitor.

A first switch S1 (also called high-side switch) of the two switches S1 and S2 is electrically connected between a first terminal of the capacitor C1 and a first terminal of the inductor L. A second switch S2 (also called low-side switch) of the two switches S1 and S2 is electrically connected between the second terminal of the capacitor C1 and a node between the first switch S1 and the inductor L. A second terminal of the inductor L is connected to a first terminal of the second capacitor C2. A second terminal of the second capacitor C2 may be connected to a terminal of the second switch S2 that is connected to the second terminal of the first capacitor C1. According to the embodiment of Figure 1 optional current sensing means (e.g. in the form of a shunt resistor R3) may be connected between the second terminal of the second capacitor C2 and the second switch S2 for sensing the inductor current I_{L} flowing through the inductor L1. The optional current sensing means may be differently arranged in the synchronous buck converter. Further, as shown in Figure 1, optional voltage sensing means(e.g. in the form of a voltage divider comprising resistors R1 and R2) may be connected to the first terminal of the second capacitor C2 for measuring the voltage of the second capacitor C2 and, thus, the output voltage of the synchronous buck converter. The voltage drop across the shunt resistor R3 of the current sensing means is negligible. The second terminal of the first capacitor C1 may be connected to ground and, thus, the second switch S2 may be connected between ground and the node between the first switch S1 and the inductor L.

The operating device 2 may further comprise the control apparatus 1 that is configured to control the two switches S1 and S2 of the synchronous buck converter and, thus, operation of the synchronous buck converter. That is, the control apparatus 1 is configured to control switching of the two switches S1 and S2 (between the conducting state and the non-conducting state). For this, the control apparatus 1 may be configured to provide a first control signal DRV_S1 to the first switch S1 and a second control signal DRV_S2 to the second switch S2. In particular, the control apparatus 1 may be configured to provide the first control signal DRV_S1 to a control terminal of the first switch S1 (e.g. to the gate terminal, in case the first switch S1 is a MOSFET). Accordingly, the control apparatus 1 may be configured to provide the second control signal DRV_S2 to a control terminal of the second switch S2 (e.g. to the gate terminal, in case the second switch S2 is a MOSFET). The control signals DRV_S1 and DRV_S2 may be referred to as drive signals (for driving the two switches S1 and S2).

The control apparatus 1 may be a digital control apparatus. For example the control apparatus 1 may be a controller, microcontroller, processor, microprocessor, application specific integrated circuit (ASIC), field programmable gate array (FPGA) or any combination thereof.

In particular, the control apparatus 1 may control rising and falling of the inductor current I_{L} of the inductor L and, thus, the lighting means current I_{LM} providable by the synchronous buck converter to the lighting means 3 (when the lighting means 3 are connected to the output of the synchronous buck converter). The greater the current I_{LM} (e.g. the temporal average of current) provided to the lighting means 3 the greater the light emission of the lighting means 3 and vice versa.

For controlling the two switches S1 and S2 the control apparatus 1 may receive a measuring signal Snsi of the inductor current I_{L} flowing through the inductor L. As outlined above, the inductor current I_{L} may be measured using the shunt resistor R3. An optional low pass filter comprising a resistor R4 and capacitor C3 may filter the voltage indicating the inductor current I_{L} to provide the first measurement signal Snsi to the control apparatus 1. The measurement of the inductor current I_{L} for informing the control apparatus 1 on the inductor current I_{L} in the form of the measurement signal Snsi may be differently implemented. Optionally, the control apparatus 1 may also receive a further measurement signal Sns2 of the output voltage of the synchronous buck converter.

A desired value of the current I_{LM} providable at the output of the synchronous buck converter may be set by setting a respective maximum inductor current (i.e. a desired maximum inductor current) and a respective minimum inductor current (i.e. a desired minimum inductor current). Thus, the control apparatus 1 may be configured to control the switches S1 and S2 such that the inductor current I_{L} changes or varies between the desired maximum inductor current and the desired minimum inductor current in order to achieve the desired current I_{LM} for the lighting means 3.

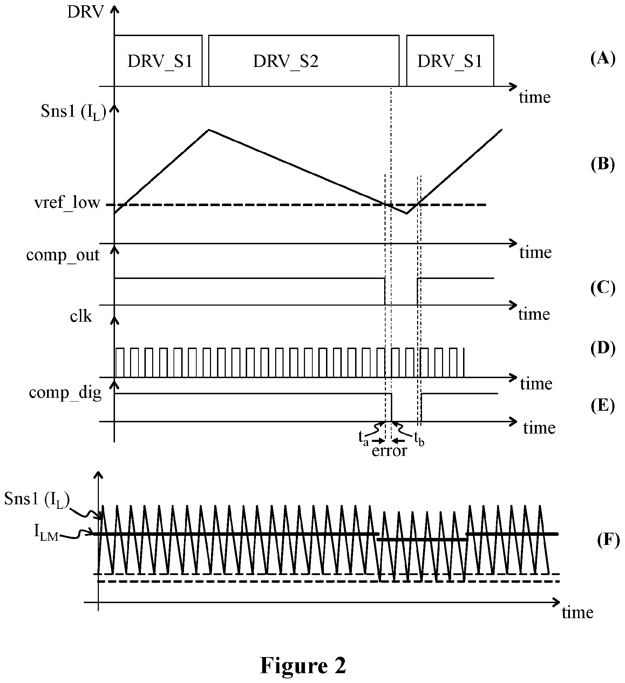

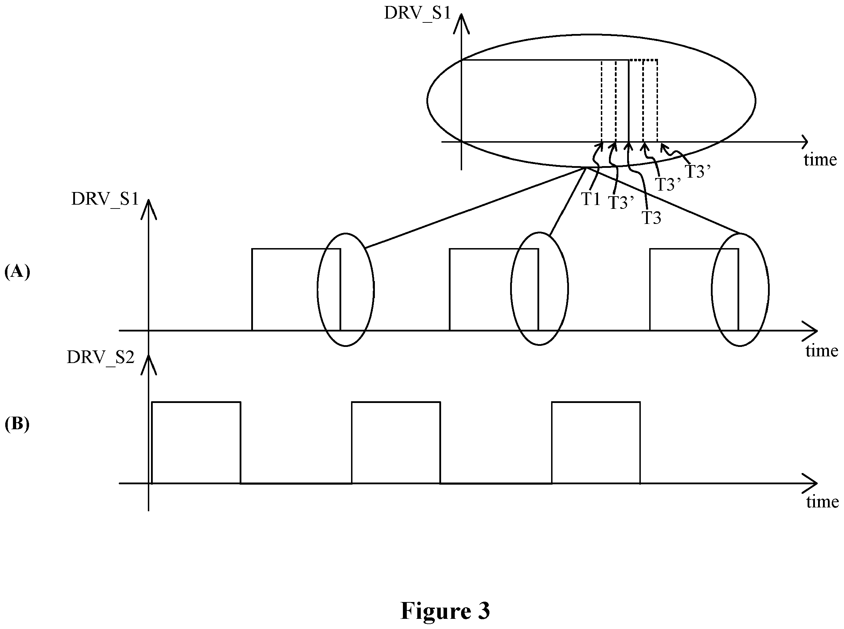

This control may be exemplarily described with respect to Figure 2, for the case that the control apparatus 1 would control the switches S1 and S2 in a usual manner. The improved control of the two switches S1 and S2 by the control apparatus 1 of Figure 1 (i.e. the actual control for which the control apparatus 1 of Figure 1 is configured) is exemplarily described with respect to Figures 3 to 5.

For further details of the control apparatus 1, the operating device 2 and the luminaire 4 of Figure 1 reference is made to the above description of the control apparatus according to the first aspect of the invention, the operating device according to the second aspect of the invention and the luminaire according to the third aspect of the invention.

**Figure 2** shows an example of a temporal course of an inductor current flowing through an inductor of a synchronous buck converter with two switches, when the two switches are switched. In the following reference is made to the components shown in Figure 1.

In Figure 2, an example of the temporal course of the control signals DRV_S1 and DRV_S2 for controlling the switches S1 and S2 of the synchronous buck converter of Figure 1 is shown in graph (A). Graph (A) shows the control signals DRV_S1 and DRV_S2 that are present at the control terminals of the switches Si and S2, respectively. It is assumed that when the control signal DRV_S1 for the first switch S1 is high, the first switch S1 is in the conducting state; and when the control signal DRV_S1 is low, the first switch S1 is in the non-conducting state. Accordingly, it is assumed that when the control signal DRV_S2 for the second switch S2 is high, the second switch S2 is in the conducting state; and when the control signal DRV_S2 is low, the second switch S2 is in the non-conducting state.

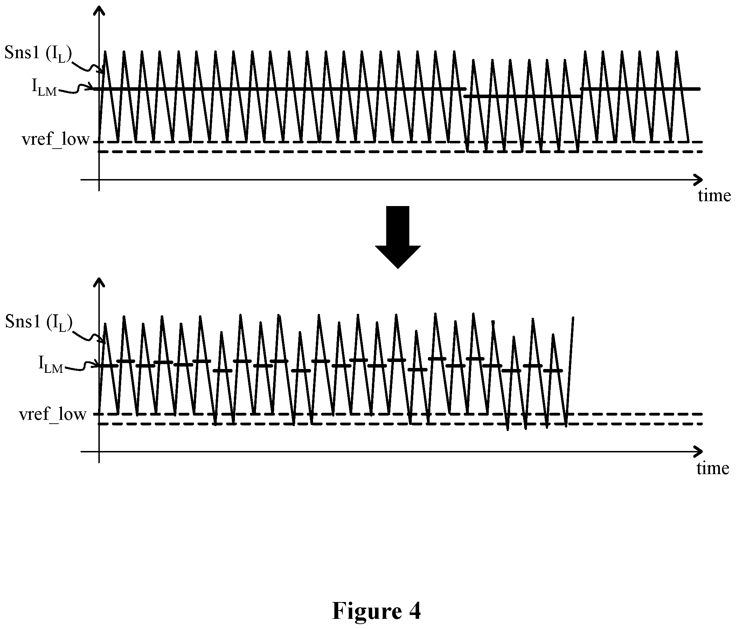

The temporal course of the measurement signal Snsi of the inductor current I_{L} due to the control of the switches S1 and S2 according to graph (A) of Figure 2 is shown in graph (B). The measurement signal Snsi, shown in graph (B) of Figure 2, is shifted so that values of the measurement signal Snsi are positive. The inductor current I_{L}, that is values of the inductor current I_{L}, may be positive and negative, which is not shown in the graph (B) of Figure 2 due to the shift. For example, the measurement signal Snsi may be generated by adding a DC offset to the inductor current I_{L}, i.e. to the values of the inductor current I_{L}. The same is true for the graph (F) of Figure 2 and the graphs of Figure 4. As shown in graph (B) of Figure 2, when the first switch S1 is in the conducting state (i.e. DRV_S1 is high) and the second switch S2 is in the non-conducting state (i.e. DRV_S2 is low), the inductor current I_{L} rises. When the first switch S1 is in the non-conducting state (i.e. DRV_S1 is low) and the second switch S2 is in the conducting state (i.e. DRV_S2 is high), the inductor current I_{L} falls. Thus, in order for the inductor current I_{L} to change between the desired maximum inductor current and the desired minimum inductor current, the control apparatus is configured to compare the measurement signal Snsi of the inductor current I_{L} with an upper threshold indicating or equaling to the desired maximum inductor current (not shown in graph (B) of Figure 2) and a lower threshold vref_low indicating or equaling to the desired minimum inductor current. That is the upper threshold is a value of the measurement signal Snsi corresponding or equaling to the desired maximum inductor current and the lower threshold is a value of the measurement signal Snsi corresponding or equaling to the desired minimum inductor current.

Therefore, when the measurement signal Snsi reaches or exceeds the upper threshold (i.e. the inductor current I_{L} reaches or exceeds the desired maximum inductor current) the control apparatus 1 should control the first switch S1 to switch to the non-conducting state in order to cause the inductor current I_{L} to stop rising. When the measurement signal Sns2 reaches or falls below the lower threshold vref_low (i.e. the inductor current I_{L} reaches or falls below the desired minimum inductor current) the control apparatus 1 should control the second switch S2 to switch to the non-conducting state in order to cause the inductor current I_{L} to stop falling.

As shown in the top graph (A) of Figure 2, the two switches S1 and S2 may be inversely switched, i.e. when one of the two switches is in the conducting state, the other switch of the two switches is in the non-conducting state. Further, controlling a switch of the two switches S1 and S2 to switch to the conducting-state after the other switch has been controlled to switch to the non-conducting state may be done with a dead time in between, during which both switches S1 and S2 are in the non-conducting state. This ensures that not both switches S1 and S2 are in the conducting-state at the same time.

In the following, the case of the measurement signal Snsi reaching the lower threshold vref_low and a respective desired control of the two switches S1 and S2 is described by way of example with regard to Figure 2. This is correspondingly valid for the case of the measurement signal Snsi reaching the upper threshold.

For determining or evaluating whether the measurement signal Snsi has reached or fallen below the lower threshold vref_low the control apparatus 1 may comprise a comparator to which the lower threshold vref_low (as reference value) and the measurement signal Snsi are input and the control apparatus 1 may sample the output of the comparator. That is, the control apparatus may digitalize the output of the comparator comparing the measurement signal Snsi with the lower threshold vref_low. Graph (C) of Figure 2 shows the temporal course of the output comp_out of the comparator, wherein the output comp_out is high as long as the measurement signal Snsi is above the lower threshold vref_low and low as long as the measurement signal Snsi is equal to or below the lower threshold vref_low. Graph (D) shows the clock signal clk with which the control apparatus 1 is clocked, wherein the control apparatus 1 samples the comparator output comp_out at each clock of the clock signal clk. That is, the control apparatus 1 samples the comparator output comp_out with the frequency of the clock signal clk. In other words, the control apparatus 1 is configured to compare the measurement signal Snsi with the lower threshold vref_low at each clock of the clock signal clk.

According to the example of Figure 2, the control apparatus 1 samples the comparator output comp_out at a rising edge of each clock of the clock signal clk. This is only by way of example and not limiting for the present disclosure (e.g. sampling may occur at the falling edge of each clock). Due to the sampling, an error may occur between the actual point in time tₐ at which the measurement signal Snsi reaches the lower threshold vref_low (point in time at which the output comp_out of the comparator changes from high to low) and the point in time t_{b} at which the control apparatus 1 determines that the output comp_out of the comparator changes from high to low. The signal comp_dig of graph (E) shows the determination or evaluation of the control apparatus 1 by sampling the output comp_out of the comparator. The point in time t_{b} at which the signal comp_dig changes from high to low is the point in time at which the control apparatus 1 determines that the output comp_out of the comparator changes from high to low and, thus, at which the measuring signal Snsi reaches the lower threshold vref_low. The signal comp_out of graph (C) is an analog comparator signal and the signal comp_dig of graph (E) is a digitized comparator signal.

As can be seen in Figure 2, due to the sampling or digitization of the comparator output comp_out, an error with regard to determining the point in time at which the measuring signal Snsi reaches the lower threshold vref_low and, thus, at which the inductor current I_{L} reaches the desired minimum inductor current may occur. This error means that the point in time t_{b} at which the control apparatus 1 actually determines that the measurement signal Snsi reaches the lower threshold vref_low is delayed with regard to the point in time tₐ at which the measurement signal Snsi actually reaches the lower threshold vref_low. This error may be up to the period (inverse of the frequency) of the clock signal clk. That is, the delay between the point in time t_{b} from the point in time tₐ may be up to the period of the clock signal clk.

The error depends on the time relationship between the analog comparator signal comp_out and the clock signal clk used for sampling the signal comp_out.

The above is correspondingly valid with regard to determining the point in time at which the measurement signal Snsi reaches the upper threshold and, thus, at which the inductor current I_{L} reaches the desired maximum inductor current.

As a result of the aforementioned error, which may often occur in a row near the period (inverse of the frequency) of the clock signal clk until the error is compensated again, the current I_{LM} providable by the synchronous buck converter may change. This is exemplarily shown in the graph (F) of Figure 2 for several periods of switching the switches S1 and S2 between the conducting and non-conducting state. As shown in graph (F), the above-described error may suddenly occur in a row for several switching periods of the switches S1 and S2. As a result, the current I_{LM} providable by the synchronous buck converter (i.e. the output current) may change or vary. In case the lighting means 3 are electrically supplied with the current I_{LM} a visible flickering of the light emission of the lighting means 3 may occur as a result of the change of the current I_{LM} (shown in graph (F) of Figure 2). Graph (F) of Figure 2 also shows the temporal course of the measurement signal Snsi of the inductor current I_{L}, wherein graph (B) of Figure 2 is an enlarged extract of a part of the measurement signal Snsi shown in Graph (F) of Figure 2.

According to the example of Figure 2, when the control apparatus 1 determines at the point in time t_{b} that the measurement signal Snsi has reached the lower threshold vref_low, the control apparatus controls the second switch S2 to switch to the non-conducting state. This may be done by changing the control signal DRV_S2 for the second switch S2 from high to low. In graph (A), the control signal DRV_S2 at the second switch S2 is not immediately changed from high to low at the point in time t_{b} due to a delay that may be caused by the hardware of the control apparatus 1 and wiring from the control apparatus 1 to the control terminal of the second switch S2.

The control apparatus 1 of Figure 1 may reduce or overcome the above problem of flickering, caused by the above-described error, by being configured as follows: The control apparatus 1 is configured to determine a first point in time at which the measurement signal Snsi reaches or exceeds the upper threshold and a second point in time at which the measurement signal Snsi reaches or falls below the lower threshold vref_low. The control apparatus 1 may perform this as outlined above. That is, the control apparatus 1 may comprise at least one comparator for comparing the measurement signal Snsi with the upper threshold and the lower threshold vref_low. The control apparatus 1 may sample the output of the at least one comparator at each clock of the clock signal clk used for clocking the control apparatus 1. In other words, the control apparatus 1 may be configured to compare the measurement signal Snsi with the lower threshold vref_low and the upper threshold at each clock of the clock signal clk.

For reducing or overcoming the above problem, the control apparatus may be configured to control at least one of the two switches S1 and S2 to switch at a third point in time or a fourth point in time. The third point in time is equal to the first point in time delayed by a first variable delay time. The fourth point in time is equal to the second point in time delayed by a second variable delay time.

Thus, according to an embodiment, the control apparatus 1 may be configured to control the first switch S1 to switch to the non-conducting state at the third point in time (instead of the first point in time) and the second switch S2 to switch to the non-conducting state at the second point in time.

According to another embodiment, the control apparatus 1 may be configured to control the first switch S1 to switch to the non-conducting state at the first point in time and the second switch S2 to switch to the non-conducting state at the fourth point in time (instead of the second point in time).

According to another embodiment, the control apparatus 1 may be configured to control the first switch S1 to switch to the non-conducting state at the third point in time (instead of the first point in time) and the second switch S2 to switch to the non-conducting state at the fourth point in time (instead of the second point in time).

The first variable delay time and the second variable delay time may be different to each other. That is, the first variable delay time and the second variable delay time may be independent of each other.

Thus, the present disclosure proposes variably delaying, by the first variable delay time, switching of the first switch S1 to the non-conducting state and/or variably delaying, by the second variable delay time, switching of the second switch S2 to the non-conducting state. This may generate an artificial error between the point in time at which the first switch S1 or the second switch S2 should be controlled to be switched to the non-conducting state and the point in time at which the first switch S1 respectively the second switch S2 are actually controlled to be switched to the non-conducting state. Since the aforementioned artificial error may be generated by the first variable delay time and/or the second variable delay time, the aforementioned artificial error changes or varies over time with a frequency that is not visible to a person. Thus, flickering of the light emission of the lighting means 3 (electrically supplied by the synchronous buck converter) that is caused by the aforementioned artificial error is not visible to a person, i.e. the human eye. In other words the use of the first variable delay time and/or the second variable delay time for controlling switching of the two switches S1 and S2 increases the frequency of occurrence of an error described with regard to Figure 2 so that the current I_{LM} providable by the synchronous buck converter changes with a frequency that is not visible to the human eye. As a result, flickering of the light emission of the lighting means 3 due to the changing current I_{LM} is not visible by a person. That is, the frequency of the change of light intensity of the light emission of the lighting means 3 due to the changing current I_{LM} is not visible by a person.

The above description is correspondingly valid with regard to controlling switching of the first switch S1 and the second switch S2 to the conducting state. For example, the control apparatus 1 may be configured to control the first switch S1 to switch to the conducting state at the fourth point in time (instead of e.g. a dead time after the second point in time). The control apparatus 1 may be configured to control the second switch S2 to switch to the conducting state at the third point in time (instead of e.g. a dead time after the first point in time). In this case, the first variable delay time and the second variable delay time may be equal to or greater than the dead time.

Within a range for the first variable delay time, the first variable delay time may be randomly changed or changed according to a repetitive pattern. Within a range for the second variable delay time, the second variable delay time may be randomly changed or changed according to a repetitive pattern.

The first variable delay time may be periodically changed. Optionally, the first variable delay time is changed every switching period of switching one of the two switches S1 and S2 (e.g. the first switch S1). The second variable delay time may be periodically changed. Optionally, the second variable delay time is changed every switching period of switching one of the two switches S1 and S2 (e.g. the second switch S2).

The first variable delay time is smaller than or equal to the period (inverse of the frequency) of the clock signal clk. The second variable delay time is smaller than or equal to the period (inverse of the frequency) of the clock signal clk.

**Figure 3** shows an example of control signals providable by a control apparatus according to an embodiment of the invention.

Graph (A) of Figure 3 shows the control signal DRV_S1 at the control terminal of the first switch S1 for driving or controlling switching of the first switch S1. Graph (B) of Figure 3 shows the control signal DRV_S2 at the control terminal of the second switch S2 for driving or controlling switching of the second switch S2. When a control signal of the control signals DRV_S1 and DRV_S2 is high then the respective switch S1 or S2 is in the conducting state and when the control signal is low then the respective switch S1 or S2 is in the non-conducting state.

Figure 3 exemplarily shows an embodiment according to which the control apparatus 1 is configured to control the first switch S1 to switch to the non-conducting state at the third point in time T3, wherein the third point in time T3 is equal to the first point in time T1 delayed by the first variable delay time. The first point in time T1 is the point in time at which the control apparatus determines that the measurement signal Snsi of the inductor current I_{L} reaches or exceeds the upper threshold. In the top graph showing a zoomed part of the graph (A), it is indicated that the third point in time may be changed or varied by changing the first variable delay time. Three further possible third points in time T3' are exemplarily shown in Figure 3.

**Figure 4** shows two examples of a temporal course of an inductor current flowing through an inductor of a synchronous buck converter with two switches, when the two switches are switched.

The top graph of Figure 4 corresponds to the graph (F) of Figure 2 and, thus, the above description with regard to Figure 2 is correspondingly valid for the top graph of Figure 4. The bottom graph of Figure 4 exemplarily shows the temporal course of the inductor current IL and the current I_{LM} providable by the synchronous buck converter for several switching periods of switching the switches S1 and S2 between the conducting and non-conducting state when the control apparatus 1 performs the control according to the present disclosure. That is, when the control apparatus 1 controls at least one of the two switches S1 and S2 to switch at the third point in time or the fourth point in time. For example, the bottom graph of Figure 4 may show the temporal course of the measurement signal Snsi of the inductor current I_{L}, when the control apparatus 1 performs the following control. The control apparatus may control during some switching periods the first switch S1 to switch to the non-conducting state at the third point in time and during some switching periods the second switch S2 to switch to the non-conducting state at the fourth point in time, wherein the first variable delay time respectively the second variable delay time is changed or varied. As a result, the current I_{LM} providable by the synchronous buck converter (i.e. the output current) changes or varies. In contrast to the top graph of Figure 4, the current I_{LM} changes with a higher frequency and, thus, with a frequency that is not visible to the human eye. As a result, the errors, introduced by switching the first switch to the non-conducting state at the third point in time (instead of the first point in time) and the second switch to the non-conducting state at the fourth point in time (instead of the second point in time), do not cause a visible flickering of the light emission of the lighting means 3 (when the lighting means 3 are electrically supplied with the current I_{LM}).

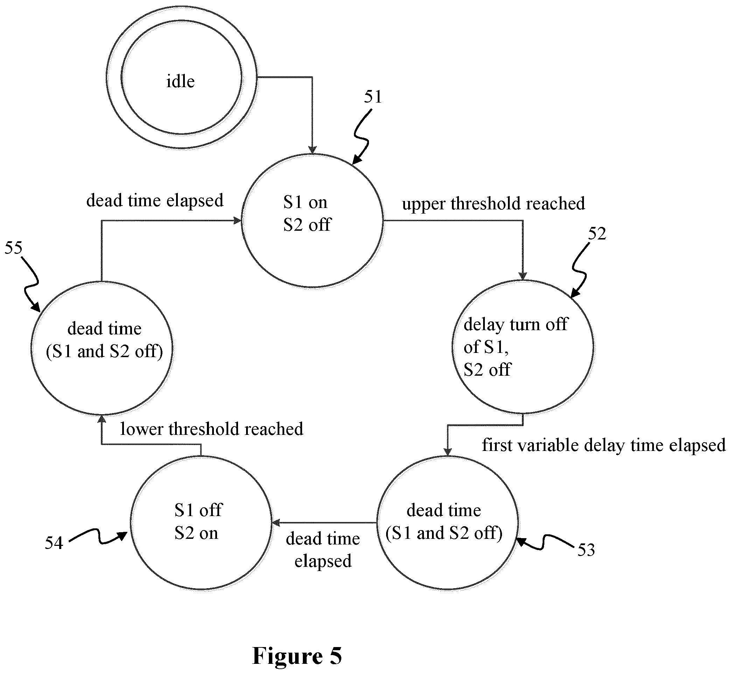

**Figure 5** shows an example of a control scheme performable by a control apparatus according to an embodiment of the invention. The control scheme is an example of the method of the fourth aspect of the present invention. The control apparatus 1 of Figure 1 may be configured to control switching of the two switches S1 and S2 of the synchronous buck converter according to the control scheme of Figure 5. Figure 5 may show a control state machine of the control apparatus 1. In the following reference is made to the components shown in Figure 1.

As shown in Figure 5, at a first state 51 the first switch S1 is in the conducting state (i.e. it is turned on or in the on-state) and the second switch S2 is in the non-conducting state (i.e. it is turned off or in the off-state). As a result the inductor current I_{L} rises. When the inductor current I_{L} reaches the desired maximum inductor current and, thus, the measurement signal Snsi of the inductor current I_{L} reaches the upper threshold, a second state 52 is reached.

At the second state 52, the control apparatus 1 delays, by the first variable delay time, controlling the first switch S1 to switch to the non-conducting state. For example, the first variable delay time may be zero seconds, 20 nanoseconds, 25 nanoseconds, 40 nanoseconds etc. In other words, the control apparatus 1 does not control the first switch S1 to switch to the non-conducting state at the first point in time, at which the control apparatus 1 determines that the measurement signal Snsi reaches the upper threshold. When the first variable delay time has elapsed the control apparatus 1 controls the first switch S1 to switch to the non-conducting state and the control scheme of Figure 5 continues to the third state 53. That is, the control apparatus 1 controls the first switch S1 to switch to the non-conducting state at the third point in time which is equal to the first point in time delayed by the first variable delay time.

At the third state 53, the control apparatus 1 waits for a dead time before switching the second switch to the conducting-state. At the third state 53, the first switch S1 and the second switch S2 are in the non-conducting state. After the dead time has elapsed, the second switch S2 is switched to the conducting state and a fourth state 54 is reached.

At the fourth state 54, the first switch S1 is in the non-conducting state and the second switch S2 is in the conducting state. As a result the inductor current I_{L} falls. When the inductor current I_{L} reaches the desired minimum inductor current and, thus, the measurement signal Snsi of the inductor current I_{L} reaches the lower threshold, the control apparatus 1 may control the second switch S2 to switch to the non-conducting state and a fifth state 55 is reached.

At the fifth state 55, the control apparatus 1 waits for a dead time before switching the first switch S1 to the conducting-state. At the fifth state 55, the first switch S1 and the second switch S2 are in the non-conducting state. After the dead time has elapsed the first switch S1 is switched to the conducting state and the first state 51 is reached.

The dead time of the third state 53 and the dead time of the fifth state 55 may equal to each other.

According to an alternative, the switching of the second switch S2 to the non-conducting state may be delayed by the second variable delay time instead of delaying the switching of the first switch S1 to the non-conducting by the first variable delay time. In this case, the control apparatus 1 controls the first switch S1 to switch to the non-conducting state, when the control apparatus determines that the measurement signal Snsi reaches the upper threshold. Thus, in this case, the first state 51 is followed by the third state 53 and the second state 52 is omitted. In addition, according to the aforementioned alternative, when the inductor current I_{L} reaches the desired minimum inductor current and, thus, the measurement signal Snsi of the inductor current I_{L} reaches the lower threshold, an intermediate state (not shown in Figure 5) is reached after the fourth state 54.

At the intermediate state the control apparatus 1 delays controlling the second switch S2 to switch to the non-conducting state by the second variable delay time. For example, the second variable delay time may be zero seconds, 20 nanoseconds, 25 nanoseconds, 40 nanoseconds etc. In other words, the control apparatus 1 does not control the second switch S2 to switch to the non-conducting state at the second point in time, at which the control apparatus 1 determines that the measurement signal Snsi reaches the lower threshold. When the second variable delay time has elapsed the control apparatus 1 controls the second switch S2 to switch to the non-conducting state and the control scheme of Figure 5 continues to the fifth state 55. That is, the control apparatus controls the second switch S2 to switch to the non-conducting state at the fourth point in time which is equal to the second point in time delayed by the second variable delay time.

According to another alternative, the switching of the second switch S2 to the non-conducting state may be delayed by the second variable delay time in addition to delaying the switching of the first switch S1 to the non-conducting state by the first variable delay time. In this case, when the inductor current I_{L} reaches the desired minimum inductor current and, thus, the measurement signal Snsi of the inductor current I_{L} reaches the lower threshold, the aforementioned intermediate state (not shown in Figure 5) is reached after the fourth state 54. When the second variable delay time has elapsed, the control apparatus 1 controls the second switch S2 to switch to the non-conducting state and the control scheme of Figure 5 continues to the fifth state 55.

By performing the variable delay at the second state 52 and/or the aforementioned intermediate state (not shown in Figure 5), it may be avoided that the control apparatus remains in an operation mode where the error between an analog comparator signal of at least one comparator for comparing the measurement signal Snsi with the upper and lower threshold and the digitized comparator signal ends up in a low frequency component. The first variable delay time and/or second variable delay time add an agitation to the control apparatus, which forces the control apparatus to react on it and shifts the low frequency light modulation (flickering) of the light emission of the lighting means 3 to a higher non visible modulation.

According to a further alternative, switching the first switch S1 and/or the second switch S2 to the conducting state may be delayed by respective variable delay times. The above description with regard to variably delaying switching of the first switch S1 and/or the second switch S2 to the non-conducting state may be correspondingly valid.

For further information on the control scheme of Figure 5 reference is made to the method of the fourth aspect of the invention.

All steps which are performed by the various entities described in the present disclosure as well as the functionalities described to be performed by the various entities are intended to mean that the respective entity is adapted to or configured to perform the respective steps and functionalities. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A control apparatus (1) for controlling two switches (S1, S2) of a synchronous buck converter; wherein the control apparatus (1) is configured to
- receive a measurement signal (Snsi) of an inductor current (I_{L}) flowing through an inductor (L) of the synchronous buck converter or of an output voltage of the synchronous buck converter,
- compare the measurement signal (Snsi) with an upper threshold and a lower threshold (vref_low),
- determine a first point in time (T1) at which the measurement signal (Snsi) reaches or exceeds the upper threshold and a second point in time at which the measurement signal (Snsi) reaches or falls below the lower threshold (vref_low), and
- control at least one of the two switches (S1, S2) to switch at a third point in time (T3) or a fourth point in time; wherein
- the third point in time (T3) is equal to the first point in time (T1) delayed by a first variable delay time, and
- the fourth point in time is equal to the second point in time delayed by a second variable delay time.

2. The control apparatus (1) according to claim 1, wherein
- the first variable delay time and the second variable delay time are different to each other.

3. The control apparatus (1) according to claim 1 or 2, wherein
- the control apparatus (1) is configured to control a first switch (Si) of the two switches (S1, S2) to switch to the non-conducting state at the third point in time (T3) or to the conducting state at the fourth point in time (T4), and/or
- the control apparatus (1) is configured to control a second switch (S2) of the two switches (S1, S2) to switch to the non-conducting state at the fourth point in time (T4) or to the conducting state at the third point in time (T3).

4. The control apparatus (1) according to claim 3, wherein
- the control apparatus (1) is configured to control the first switch (Si) to switch to the non-conducting state at the third point in time (T3), and
- the control apparatus is configured to control the second switch (S2) to switch to the non-conducting state at the second point in time or at the fourth point in time.

5. The control apparatus (1) according to claim 3 or 4, wherein
- the control apparatus (1) is configured to control the second switch (S2) to switch to the non-conducting state at the fourth point in time, and
- the control apparatus (1) is configured to control the first switch (Si) to switch to the non-conducting state at the first point in time (T1) or at the third point in time (T3).

6. The control apparatus (1) according to any one of the previous claims, wherein
- the control apparatus (1) is configured to control the two switches (S1, S2) such that the two switches (S1, S2) are inversely switched between the conducting state and the non-conducting state.

7. The control apparatus (1) according to any one of the previous claims, wherein
- the control apparatus (1) is configured to control
- a first switch (Si) of the two switches (S1, S2) to switch to the conducting state after a first dead time has passed since the control apparatus (1) has controlled a second switch (S2) of the two switches (S1, S2) to switch to the non-conducting state (S2), and
- the second switch (S2) to switch to the conducting state after a second dead time has passed since the control apparatus (1) has controlled the first switch (Si) to switched to the non-conducting state, wherein
- during the first dead time and the second dead time the two switches (S1, S2) are both in the non-conducting state.

8. The control apparatus (1) according to any one of the previous claims, wherein
- the control apparatus (1) is configured to
- be clocked with a clock signal (clk), and
- compare the measurement signal (Snsi) with the lower threshold (vref_low) and the upper threshold at each clock of the clock signal (clk), optional at a rising edge or at a falling edge of each clock of the clock signal (clk).

9. The control apparatus (1) according to any one of the previous claims, wherein
- within a range for the first variable delay time, the first variable delay time is randomly changed or changed according to a repetitive pattern; and/or
- within a range for the second variable delay time, the second variable delay time is randomly changed or changed according to a repetitive pattern

10. The control apparatus (1) according to any one of the previous claims, wherein
- the first variable delay time is periodically, optionally every switching period of switching one of the two switches (S1, S2), changed; and/or
- the second variable delay time is periodically, optionally every switching period of switching one of the two switches (S1, S2), changed.

11. An operating device (2) for lighting means (3), optional at least one light emitting diode, LED; wherein the operating device (2) comprises
- the control apparatus (1) according to any one of the previous claims,
- a synchronous buck converter for electrically supplying the lighting means (3), the synchronous buck converter comprising two switches (S1, S2), wherein
- the control apparatus (1) is configured to control the two switches (S1, S2) of the synchronous buck converter.

12. A luminaire (4) comprising
- the operating device (2) according to claim 11, and
- lighting means (3), optional at least one light emitting diode, LED; wherein
- the operating device (2) is configured to operate the lighting means (3).

13. A method for controlling two switches (S1, S2) of a synchronous buck converter;
- wherein the method comprises:
- receiving a measurement signal (Snsi) of an inductor current (I_{L}) flowing through an inductor (L) of the synchronous buck converter or of an output voltage of the synchronous buck converter,
- comparing the measurement signal (Snsi) with an upper threshold and a lower threshold (vref_low),
- determining a first point in time (T1) at which the measurement signal (Snsi) reaches or exceeds the upper threshold and a second point in time at which the measurement signal (Snsi) reaches or falls below the lower threshold (vref_low), and
- controlling at least one of the two switches (S1, S2) to switch at a third point in time (T3) or a fourth point in time; wherein
- the third point in time (T3) is equal to the first point in time (Ti) delayed by a first variable delay time, and
- the fourth point in time is equal to the second point in time delayed by a second variable delay time.
